# EUROPEAN PATENT APPLICATION

(11) **EP 4 421 433 A2**
(43) Date of publication of application: **28.08.2024**
(21) Application number: 24158108.1
(22) Date of filing: 16.02.2024
(51) Int. Cl.: F25J 1/00

(54) **APPARATUS AND PROCESS FOR ABSORPTION CHILLER UTILIZATION FOR ENVIRONMENTALLY FRIENDLY HYDROGEN PRODUCTION**

(30) Priority: 21.02.2023 US 202318111932
(71) Applicant: Air Products and Chemicals, Inc., Allentown, PA 18106 (US)
(72) Inventor: KRISHNAMURTHY, Gowri, Sellersville, 18960 (US); DOBEK, Frank J, Allentown, 18106 (US); WILSON, Graeme Richard, Surbiton, KT5 8JY (GB); CHEN, Fei, New Jersey, 08889 (US); MORGENSTERN, Michael T, Macungie, 18062 (US)
(74) Representative: Beck Greener LLP

(57) **Abstract**

A process and apparatus for utilization of an absorption chiller for hydrogen production can include an arrangement configured for providing at least one heated waste stream of fluid from at least one hydrogen production unit to an absorption chiller generator to power the absorption chiller. Coolant can be generated *via* the heated waste stream for feeding coolant from the generator to an evaporator for cooling a chilling medium to a pre-selected chilling temperature to provide cooling to one or more process elements. The warmed chilling medium can be returned to the absorption chiller evaporator for subsequent cooling back to the pre-selected chilling temperature to provide a closed-circuit cooling arrangement. The waste fluid fed to the generator can be output as a cooled waste fluid for returning to hydrogen production for further use or be output for treatment and/or disposal.

## Description

The present innovation relates to processes and systems for utilization of an absorption chiller in hydrogen production systems. Hydrogen may also be referred to herein as H2 or H₂.

Hydrogen can be formed from a feed gas (*e.g*., methane). Examples of hydrogen production systems can be appreciated from U.S. Patent Application Publication Nos. 2022/0397119, 2022/0397118, 2022/0033983, European Patent No. EP 3 241 805 B1, and U.S. Patent Nos. 7,510,696, 7,438,889 and 7,275,569.

Hydrogen production systems that utilize renewable power and non-carbon-based feeds ("green hydrogen" systems) and hydrogen production systems that utilize conventional feeds and may use carbon capture technology to reduce the carbon footprint associated with the hydrogen production ("blue hydrogen" systems) can be very energy intensive as compared to conventional systems that utilize a carbon-based feed (*e.g*., methane) without use of any type of carbon capture technology. We determined that the increased power utilization required in green hydrogen-based and blue hydrogen-based systems can be substantial and create unanticipated costs and process constraints. We also determined that "green hydrogen" systems often have more waste streams that are heated that can be available as a low-grade heat source that often does not have a use-case. As a result, the low heat waste streams often cause disposal related issues (*e.g*., reduction of heat for disposal of the waste stream, disposal and treatment of the waste stream, *etc.).*

We determined that the waste streams having low pressure and heat (*e.g*., low heat waste streams) can be utilized as a process asset so that the low-grade heated waste stream can be utilized to power an absorption chiller for providing cooling to one or more process elements (*e.g.*, compression system and/or purification system, *etc.*). Embodiments can be employed for upstream hydrogen production and/or ammonia production as well as downstream hydrogen production processes. For example, a heated waste fluid stream from one or more electrolyzers can be utilized for feeding to an absorption chiller generator to help power the absorption chiller for generation of a cooling medium to provide cooling for one or more process elements (*e.g.*, compression system, a deoxygenation reactor aftercooler of a purification system, *etc*.) and to achieve returned process element temperatures that may otherwise not be achievable with conventional air-cooling or water-cooling systems. As another example, a heated waste flue gas from one or more ammonia dissociator systems (*e.g.*, a cracker or other type of dissociator system) can be a heated waste stream that can be fed to an absorption chiller generator to help power the absorption chiller to provide a cooling medium for use by one or more process elements.

Exemplary one or more electrolyzers that can be utilized in embodiments can include electrolyzers of various different types or configurations. For example, at least one electrolyzer can be configured as an alkaline water electrolysis (AWE) electrolyzer, a proton exchange membrane electrolyzer, an anion exchange membrane electrolyzer, a solid oxide electrolyzer cell (SOEC) electrolyzer, or other type of electrolyzer. If an SOEC electrolyzer is utilized, then the heat source may not be hot water but may instead be waste heat (*e.g.*, heated fluid, heated gas stream, *etc.).* In a preferred embodiment each electrolyzer is an AWE type of electrolyzer with hot water as the heat source.

We surprisingly found that use of one or more heated waste streams for powering an absorption chiller can allow reduced electricity demand, or power demand, for providing chilling of process elements. Embodiments can permit additional cooling that can be provided at a cost savings to an operator as well as an increase in operational flexibility. Embodiments can also provide an advantage over the use of mechanical chillers to provide chilling in such systems by avoiding or minimizing electricity costs associated with such chillers. As such costs can be significant, embodiments can permit chilling to be a process feature without incurring detrimental operational costs that may prevent the chilling from being employed as well as creating other waste fluid disposal complications.

In a first aspect, an apparatus for utilization of an absorption chiller in hydrogen production can include an absorption chiller having a generator and an evaporator. The absorption chiller can be positioned so at least one heated waste fluid stream from a hydrogen production unit and/or an ammonia manufacturing unit is receivable by the generator to provide heat for operation of the absorption chiller. The generator can be configured to provide a refrigerant for feeding to the evaporator. The evaporator can be configured to cool a chilling medium to a pre-selected chilling temperature *via* the refrigerant to output the chilling medium at the pre-selected chilling temperature to (i) a compression system positioned to compress hydrogen output from the hydrogen production unit, (ii) a hydrogen purification unit positioned to remove impurities from compressed hydrogen output from the compression system, (iii) a liquefaction pre-cooler positioned to cool hydrogen before the hydrogen is fed to a liquefaction unit, and/or (iv) the liquefaction unit positioned to liquify the hydrogen gas to form at least one liquefied hydrogen product stream.

The pre-selected chilling temperature can be a temperature that is within a pre-selected temperature range for the chilling medium. The pre-selected temperature can be a suitable temperature selected for a particular set of design criteria and/or process control objectives. For example, in some embodiments the pre-selected chilling temperature is a temperature between 5°C and 15°C, *i.e.*, in a range from 5°C and 15°C, or can be a temperature within a different pre-selected range of acceptable chilling temperatures.

Embodiments of the apparatus can be configured for utilization in a plant for hydrogen production, hydrogen manufacturing, and/or other processing (*e.g.*, an ammonia manufacturing facility, *etc.).* Some embodiments can be configured to be retrofit into a pre-existing plant so that the pre-existing plant can be upgraded or altered to include the adsorption chiller.

In a second aspect, the apparatus can include the compression system and the hydrogen production unit. The hydrogen production unit can include at least one electrolyzer or at least one ammonia dissociator. The compression system can include at least one compressor positioned to compress hydrogen gas output from the hydrogen production unit to a pre-selected compression system output pressure for feeding to the hydrogen purification unit.

In a third aspect, the apparatus can include the hydrogen purification unit. The hydrogen purification unit can include a deoxygenation reactor aftercooler and at least one adsorber. The hydrogen purification unit can be positioned to receive the hydrogen gas at the pre-selected compression system output pressure output from the compression system.

In a fourth aspect, the apparatus can include the liquefaction unit. The liquefaction unit can be positioned to receive purified hydrogen gas output from the hydrogen purification unit to liquify the purified hydrogen gas. The liquefaction unit can include at least one liquefier to liquefy the purified hydrogen gas to form liquified hydrogen.

In a fifth aspect, the apparatus of the first aspect can include features of the second aspect, the third aspect and/or the fourth aspect. For example, the absorption chiller can be configured to output the chilling medium at the pre-selected chilling temperature to the compression system and a deoxygenation reactor aftercooler of the hydrogen purification unit.

As another example, the absorption chiller can be configured to output the chilling medium at the pre-selected chilling temperature to the compression system. As yet another example, the absorption chiller can be configured to output the chilling medium at the pre-selected chilling temperature to a deoxygenation reactor aftercooler of the hydrogen purification unit. As yet another example, the absorption chiller can be configured to output the chilling medium at the pre-selected chilling temperature to the liquefaction pre-cooler. As yet another example, the absorption chiller can be configured to output the chilling medium at the pre-selected chilling temperature to the liquefaction pre-cooler and the compression system. As yet another example, the absorption chiller can be configured to output the chilling medium at the pre-selected chilling temperature to the liquefaction pre-cooler and a deoxygenation reactor aftercooler of the hydrogen purification unit.

In a sixth aspect, the chilling medium can be water or include water and the pre-selected chilling temperature can be a temperature between 5°C and 15°C, *i.e.*, in a range from 5°C and 15°C,.

In a seventh aspect the at least one heated waste fluid stream can be heated water output from at least one electrolyzer of the hydrogen production unit, steam from an ammonia loop of the ammonia manufacturing unit, flue gas from a dissociator of the hydrogen production unit and/or flue gas from the ammonia loop of the ammonia manufacturing unit. In some embodiments, the chilling medium can be water and the pre-selected chilling temperature can be a temperature between 5°C and 15°C, *i.e.*, in a range from 5°C and 15°C,.

In an eighth aspect, the apparatus of the first aspect can include one or more features of any of the second aspect, third aspect, fourth aspect, fifth aspect, sixth aspect and/or seventh aspect discussed above. Such an embodiment can include subparts of features of different aspects or all the features of all the different aspects. It should be appreciated that yet other embodiments can also include additional features.

In a ninth aspect, a process for utilization of an absorption chiller in hydrogen production is provided. The process can include forming a refrigerant vapor to feed to an evaporator of the absorption chiller *via* heat from at least one waste fluid stream output from a hydrogen production unit and/or an ammonia manufacturing unit and cooling a chilling medium to a pre-selected chilling temperature *via* the evaporator using the refrigerant vapor.

Embodiments of the apparatus for utilization of an absorption chiller in hydrogen production can be configured to implement an embodiment of this process. Embodiments of the process can also utilize other steps.

In a tenth aspect, the process can include returning warmed chilling medium to the evaporator for cooling the warmed chilling medium to the pre-selected chilling temperature. In some embodiments, the pre-selected chilling temperature can be between 5°C and 15°C, *i.e*., in a range from 5°C and 15°C. The chilling medium in such embodiments can include liquid water, be liquid water, or be another suitable fluid.

In an eleventh aspect, the process can include outputting the chilling medium from the evaporator to at least one of (i) a compression system positioned to compress hydrogen output from the hydrogen production unit, (ii) a hydrogen purification unit positioned to remove impurities from compressed hydrogen output from the compression system, (iii) a liquefaction pre-cooler positioned to cool hydrogen before the hydrogen is fed to a liquefaction unit and/or (iv) the liquefaction unit positioned to liquify hydrogen gas to form at least one liquefied hydrogen product stream. Some embodiments may utilize all of (i), (ii), (iii) and (iv) while other embodiments may only utilize one of these options, may only utilize a combination of two of these options, or may only utilize a combination of only three of these options.

For example, in some embodiments, the outputting of the chilling medium from the evaporator can be performed to output the chilling medium to the compression system for compression intercooling and/or compression aftercooling. As another example, the outputting of the chilling medium from the evaporator can be performed to output the chilling medium to a deoxygenation reactor aftercooler of the hydrogen purification unit. As yet another example, the outputting of the chilling medium from the evaporator can be performed to output the chilling medium to the liquefaction pre-cooler As yet another example, the outputting of the chilling medium from the evaporator can be performed to output the chilling medium to a deoxygenation reactor aftercooler of the hydrogen purification unit and output the chilling medium to the compression system for compression intercooling and/or compression aftercooling. As yet another example, the outputting of the chilling medium from the evaporator can be performed to output the chilling medium to a deoxygenation reactor aftercooler of the hydrogen purification unit and output the chilling medium to the liquefaction pre-cooler.

In a twelfth aspect, the process of the ninth aspect can be combined with one or more features of the tenth aspect and/or one or more features of the eleventh aspect. Embodiments can also utilize other features or steps.

It should be appreciated that embodiments of the process and apparatus can utilize various conduit arrangements and process control elements. The embodiments may utilize sensors (*e.g.*, pressure sensors, temperature sensors, flow rate sensors, concentration sensors, *etc*.), controllers, valves, piping, and other process control elements. Some embodiments can utilize an automated process control system and/or a distributed control system (DCS), for example. Various different conduit arrangements and process control systems can be utilized to meet a particular set of design criteria.

Other details, objects, and advantages of our process for utilization of an absorption chiller for hydrogen production, an apparatus for absorption chiller use in hydrogen production systems, and methods of making and using the same will become apparent as the following description of certain exemplary embodiments thereof proceeds.

Exemplary embodiments of processes for utilization of an absorption chiller for hydrogen production, an apparatus for absorption chiller use in hydrogen production systems, and methods of making and using the same are shown in the drawings included herewith. It should be understood that like reference characters used in the drawings may identify like components.
Figure 1 is a block diagram of a first exemplary embodiment of an apparatus 1 for utilization of an absorption chiller for hydrogen production. Figure 1 also illustrates a first exemplary embodiment of a process for utilization of an absorption chiller for hydrogen production.
Figure 2 is a block diagram of a first exemplary implementation of the first exemplary embodiment of the apparatus 1 for utilization of an absorption chiller for hydrogen production shown in Figure 1.
Figure 3 is a block diagram of a second exemplary implementation of the first exemplary embodiment of the apparatus 1 for utilization of an absorption chiller for hydrogen production shown in Figure 1.
Figure 4 is a block diagram of a third exemplary implementation of the first exemplary embodiment of the apparatus 1 for utilization of an absorption chiller for hydrogen production shown in Figure 1.
Figure 5 is a block diagram of an exemplary embodiment of the absorption chiller 21 that can be utilized in the exemplary embodiment of the apparatus 1 shown in Figure 1 as well as the exemplary implementations of that embodiment shown in Figures 2-4.
Figure 6 is a flow chart illustrating an exemplary embodiment of a process for utilization of an absorption chiller for hydrogen production. Exemplary embodiments of the apparatus 1 shown in Figures 1-4 can be adapted to implement the exemplary embodiment of the process shown in Figure 6.

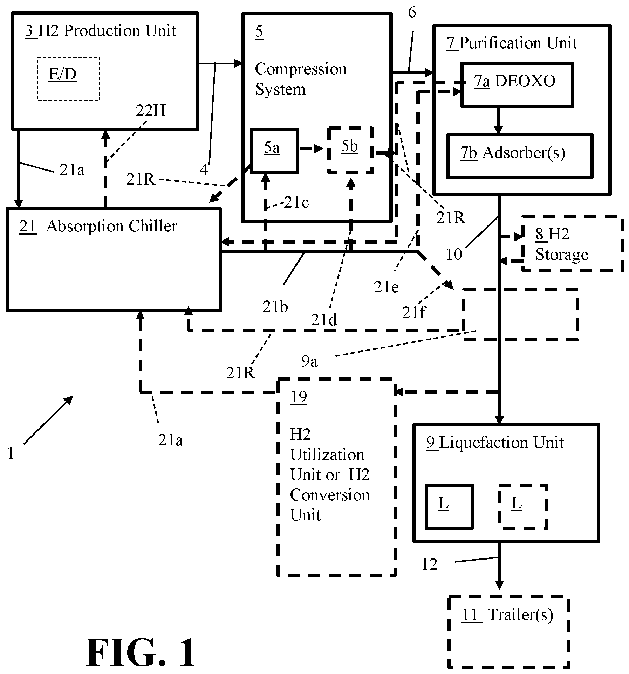

As noted above, Figure 1 illustrates exemplary embodiments of our apparatus 1 for utilization of an absorption chiller for hydrogen production. The apparatus 1 can include an absorption chiller 21 that is positioned to receive at least one heated waste stream of fluid from a hydrogen production unit 3 (H2 Production Unit) *via* an absorption chiller feed conduit 21a positioned between the absorption chiller 21 and the hydrogen production unit 3. The at least one heated waste stream can be heated water or circulating electrolyte output from one or more electrolyzers of the hydrogen production unit 3 or heated flue gas from an ammonia dissociator (the electrolyzer(s) or ammonia dissociator(s) of the hydrogen production unit 3 is illustrated as "E/D" in Figures 1-4). The heated waste stream of fluid provided *via* the absorption chiller feed conduit 21a can also be flue gas from a methane reformer or other type of hydrogen production device of the hydrogen production unit 3.

Electrolyzers that can be utilized in embodiments can include electrolyzers of various different types or configurations. For example, at least one electrolyzer can be configured as an alkaline water electrolysis (AWE) electrolyzer, a proton exchange membrane electrolyzer, an anion exchange membrane electrolyzer, a solid oxide electrolyzer cell (SOEC) electrolyzer, or other type of electrolyzer. If an SOEC electrolyzer is utilized, then the heat source may not be hot water or a hot liquid but may instead be waste heat of a different type of fluid (*e.g.*, heated gas stream, *etc.).*

Also, in embodiments in which the apparatus 1 also includes an ammonia manufacturing unit (which can be an optionally provided hydrogen conversion unit or hydrogen utilization unit 19 as noted herein), an absorption chiller feed conduit 21a can also be positioned between the absorption chiller 21 and a hydrogen conversion unit or hydrogen utilization unit 19 (*e.g.*, the ammonia loop of the ammonia manufacturing unit or other type of exothermic H2 conversion/utilization processing unit) so that heated steam or other heated fluid from the hydrogen utilization unit or hydrogen conversion unit 19 (H2 Utilization Unit or H2 Conversion Unit) can be fed to the absorption chiller to help power the absorption chiller 21. This type of arrangement is shown in broken line in Figure 1 and can be utilized in combination with or as an alternative to at least one heated waste stream being provided *via* the absorption chiller feed conduit 21a positioned between the absorption chiller 21 and the hydrogen production unit 3.

As noted herein, other embodiments of the apparatus 1 may not include a hydrogen conversion unit or hydrogen utilization unit 19. Examples of such embodiments can include embodiments configured to liquify the hydrogen to form liquefied hydrogen, for example.

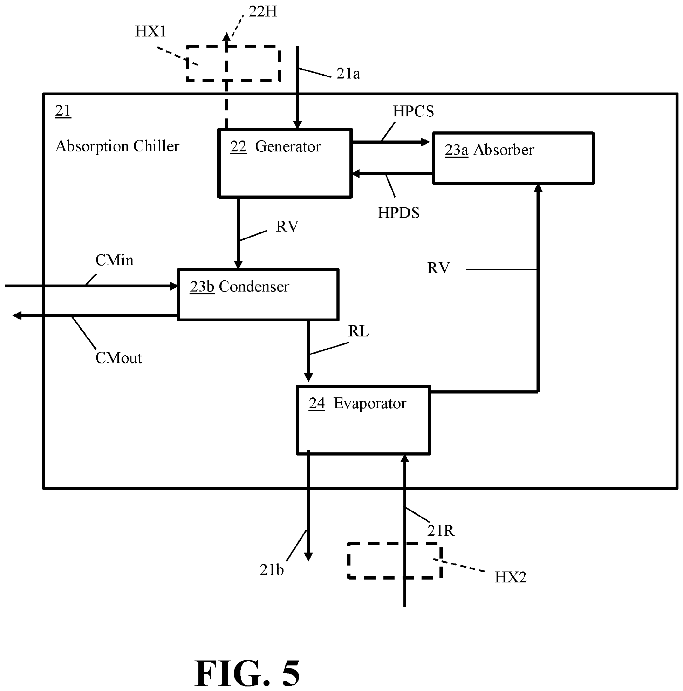

As may best be appreciated from Figure 5, the absorption chiller 21 can receive the one or more heated waste streams *via* the at least one absorption chiller feed conduit 21a to provide a heat input to the generator 22 of the absorption chiller 21 for powering the absorption chiller for operation of the absorption chiller to provide a cooling medium for cooling, or chilling, one or more elements of the apparatus 1. For example, the cooling medium provided *via* operation of the absorption chiller 21 can be output to provide cooling *via* at least one absorption chiller cooling medium output conduit 21b connected between the absorption chiller 21 and at least one of the compression system 5, aftercooler of a deoxygenation reactor (DEOXO) 7a of a purification unit 7, and/or a liquefaction pre-cooler positioned for cooling a feed of hydrogen to a pre-selected liquefaction feed temperature before the hydrogen is fed to a liquefaction unit 9. Exemplary implementations of such configurations are discussed in more detail herein.

Referring to Figures 1-4, hydrogen gas produced *via* the hydrogen production unit 3 (*e.g.*, *via* one or more electrolyzers or ammonia dissociators (E/D)) can be fed to a compression system 5 to undergo compression *via* a compression system feed conduit 4 positioned between the compression system 5 and the hydrogen production unit 3. The hydrogen gas can be compressed *via* the compression system to a pre-selected compression system output pressure *via* at least one compressor of the compression system 5. The compression system can include at least a first compressor 5a to provide such compression of the hydrogen gas. In some implementations, there can be additional compressors where the first compressor 5a can be considered a low pressure (LP) compressor and at least one second compressor 5b downstream of the first compressor 5a can provide further compression so that the hydrogen gas output from the compression system 5 is at the pre-selected compression system output pressure. The second compressor(s) 5b can be considered at least one middle pressure (MP) and/or at least one high pressure (HP) compressor in such arrangements.

The compressed hydrogen gas at the pre-selected compression system output pressure can be output from the compression system 5 and fed to a purification unit 7 *via* a purification unit feed conduit 6 positioned between the compression system 5 and the purification unit 7. The pre-selected compression system output pressure can be any pre-selected suitable pressure that is within a pre-selected suitable pressure range. Examples of such a pre-selected compression system output pressure can include a pressure within the range of greater than 1 MPa and less than 10 MP, between 1 MPa and 7 MPa (*i.e*., in a range from 1 MPa to 7 MPa), or between 1 MPa and 5 MPa (*i.e.*, in a range from 1 MPa to 5 MPa) or other suitable pressure range.

The purification unit 7 can include a deoxygenation reactor that includes a catalyst material therein to react with the compressed hydrogen gas and remove oxygen from the compressed hydrogen gas fed to the purification unit. A deoxygenation reactor aftercooler (DEOXO) can be positioned to cool the deoxygenized hydrogen gas output from the deoxygenation reactor to a pre-selected adsorber feed temperature for subsequently feeding the hydrogen gas flow to at least one adsorber 7b for removal of additional impurities from the hydrogen gas (*e.g.*, water, *etc.).* The adsorber(s) 7b can include one or more radial adsorbers, one or more vertical adsorbers, one or more horizontal adsorbers, or a combination of adsorbers that include adsorbent material therein for being contacted with the hydrogen gas flow output from the deoxygenation reactor aftercooler 7a for adsorption of impurities from the hydrogen gas flow to provide a purification unit output flow of hydrogen that has a pre-selected hydrogen content and a pre-selected impurity concentration. The absorbent material can include, for example, silica or alumina for removal of moisture from the hydrogen gas.

The pre-selected hydrogen content and a pre-selected impurity concentration can be selected so the hydrogen output from the purification unit 7 can be suitable for liquefaction *via* at least one liquefier L of a liquefaction unit 9. For instance, the pre-selected hydrogen content can be between 90 volume percent (vol%) hydrogen and 100 vol% hydrogen and the pre-selected impurity concentration can be between 10 vol% and 0 vol%, *i.e.*, from 10 vol% to 0 vol%. As another example, the pre-selected hydrogen content can be between 99 vol% hydrogen and 100 vol% hydrogen, *i.e*., in a range from 99 vol% to 100 vol% hydrogen, and the pre-selected impurity concentration can be between 1 vol% and 0 vol%, *i.e.*, in a range from 1 vol% to 0 vol%.

The purified hydrogen gas having the pre-selected hydrogen concentration and the pre-selected impurity concentration can be output from the purification unit 7 for feeding to a liquefaction unit 9 and/or hydrogen storage 8 (H2 Storage) *via* a purification unit output conduit 10 that is connected between the purification unit 7 and the liquefaction unit 9 and/or the one or more storage vessels of the hydrogen storage 8. Alternatively, or in combination, the hydrogen gas output from the purification unit 7 can be fed to an H2 Utilization Unit or H2 Conversion Unit 19 (*e.g*., an ammonia loop of an ammonia manufacturing unit or other type of exothermic hydrogen conversion process unit and/or hydrogen utilization process unit), so that the hydrogen gas can be used in ammonia manufacturing or other type of hydrogen conversion or utilization process. Such an H2 Utilization Unit or H2 Conversion Unit 19 can utilize the hydrogen gas output from the purification unit 7 as well as a feed of nitrogen gas from an air separation unit (ASU) to form ammonia, for example.

The liquefaction unit 9 can include one or more liquefiers L to form at least one liquified hydrogen product stream 12. The liquified hydrogen product stream can be fed to one or more trailers 11 for transport to off-site locations for use of the liquified hydrogen as a source of fuel. The trailer(s) 11 can include tube trailers or other type of trailer suitable for the transportation of liquified hydrogen *via* railroad, roadway and/or ship.

The liquefaction unit 9 can be connected to the purification unit 7 and the hydrogen storage 8 to receive the hydrogen gas as a feed to the liquefier(s) L for liquefaction of the hydrogen to form the at least one liquified hydrogen product stream 12. For example, at least one liquefaction feed conduit can be connected between the hydrogen storage 8 and/or purification unit 7 and the liquefaction unit 9 to provide the feed of hydrogen gas to the liquefaction unit. Such a feed conduit can be connected to or can be the purification unit output conduit 10.

The apparatus can also include a liquefaction feed pre-cooler 9a that can be positioned between the purification unit 7 and/or hydrogen storage 8 and the liquefaction unit 9. The pre-cooler 9a can be a heat exchanger configured to cool the purified hydrogen gas having the pre-selected hydrogen concentration and the pre-selected impurity concentration to a pre-selected liquefaction feed temperature so that the hydrogen fed to the liquefaction unit 9 is at this pre-selected liquefaction feed temperature. An example of a pre-selected liquefaction feed temperature can be a temperature between 25°C and -25°C (*i.e*., in a range from 25°C to -25°C), a temperature between 15°C and -10°C (*i.e.*, in a range from 15°C to -10°C), a temperature between 20°C and 5°C (*i.e.*, in a range from 20°C to 5°C), a temperature between 20°C and 0°C (*i.e*., in a range from 20°C to 0°C), or another temperature that is suitable for feeding to at least one liquefier L for liquefaction of the hydrogen gas.

As noted above, the absorption chiller 21 can be provided to facilitating cooling of the hydrogen gas at one or more different elements of the apparatus 1. A cooling medium (*e.g*., chilled water, chilled fluid, *etc.)* can be output from the absorption chiller 21 *via* at least one absorption chiller cooling medium output conduit 21b for providing a flow of the cooling medium to one or more process elements to provide cooling that can improve performance and efficiency of the operation of the apparatus 1 without incurring an increase in electricity costs or usage or without incurring a significant increase in electricity cost or usage.

For example, the cooling medium at a pre-selected cooling fluid temperature can be output from the absorption chiller 21 *via* the absorption chiller cooling medium output conduit 21b to provide that cooling medium to a heat exchanger for cooling compressed gas output from one or more stages of a first compressor 5a *via* a first compressor cooling medium feed conduit 21c connected to the absorption chiller cooling medium output conduit 21b and/or provided the cooling medium to a heat exchanger for cooling compressed gas output from one or more stages of a second compressor 5b *via* a second compressor cooling medium feed conduit 21d connected to the absorption chiller cooling medium output conduit 21b. Also (or alternatively), the cooling medium at a pre-selected cooling fluid temperature can be output from the absorption chiller 21 *via* the absorption chiller cooling medium output conduit 21b to provide that cooling medium to the deoxygenation reactor aftercooler (DEOXO) 7a *via* a purification unit heat exchanger cooling medium feed conduit 21e connected to the absorption chiller cooling medium output conduit 21b.

Additionally (or as yet another alternative), the cooling medium at the pre-selected cooling fluid temperature can be output from the absorption chiller 21 *via* the absorption chiller cooling medium output conduit 21b to provide that cooling medium to a liquefaction feed pre-cooler 9a to cool the hydrogen gas being fed to the liquefaction unit to the pre-selected liquefaction feed temperature. The cooling medium output from the absorption chiller can be provided to the liquefaction feed pre-cooler 9a *via* a liquefaction pre-cooler cooling medium feed conduit 21f connected to the absorption chiller cooling medium output conduit 21b.

Additionally (or as yet another alternative), the cooling medium at the pre-selected cooling fluid temperature can be output from the absorption chiller 21 *via* the absorption chiller cooling medium output conduit 21b to provide liquefier inter-cooling. The cooling medium output from the absorption chiller can be provided *via* a liquefaction inter-cooling medium feed conduit connected to the absorption chiller cooling medium output conduit 21b, for example. A warmed cooling medium return conduit can also be connected between the absorption chiller 21 and the liquefaction unit 9 to facilitate a return of the warmed chilling medium to the absorption chiller 21.

As indicated *via* broken line in Figure 1, embodiments of the apparatus 1 can utilize all of these various different cooling medium conduits for feeding a cooling medium output from the absorption chiller to the different elements or can use only a selected sub-set of such conduits (*e.g.*, only one, only two, or only three of the various different options, *etc.).*

The cooling medium can be output as a warmed cooling medium after the cooling medium is utilized to provide cooling. The warmed cooling medium can be returned to the absorption chiller 21 *via* at least one warmed cooling medium return conduit 21R to be re-cooled back to the pre-selected cooling fluid temperature, which can also be considered a pre-selected chilling temperature. For example, there can be a warmed cooling medium return conduit 21R connected between a first compressor cooler and the absorption chiller 21, a warmed cooling medium return conduit 21R connected between a second compressor cooler and the absorption chiller 21, a warmed cooling medium return conduit 21R connected between the deoxygenation reactor aftercooler and the absorption chiller 21, and/or a warmed cooling medium return conduit 21R connected between the liquefaction feed pre-cooler 9a and the absorption chiller 21. The warmed cooling medium return conduit(s) 21R can be provided so that the absorption chiller 21 is able to provide a cooling medium in a closed-circuit arrangement.

The pre-selected chilling temperature for the cooling medium output by the absorption chiller 21 can be a suitable temperature to provide the desired cooling for one or more process elements. For instance, the pre-selected chilling temperature can be a temperature in the range from 20°C to 5°C, a temperature in the range from 25°C to 1°C, a temperature of between 20°C and 10°C, *i.e.*, in a range from 20°C to 10°C, (e.g., 20°C, 17°C, 15°C, 13°C, or 10°C, *etc*.), or another suitable temperature.

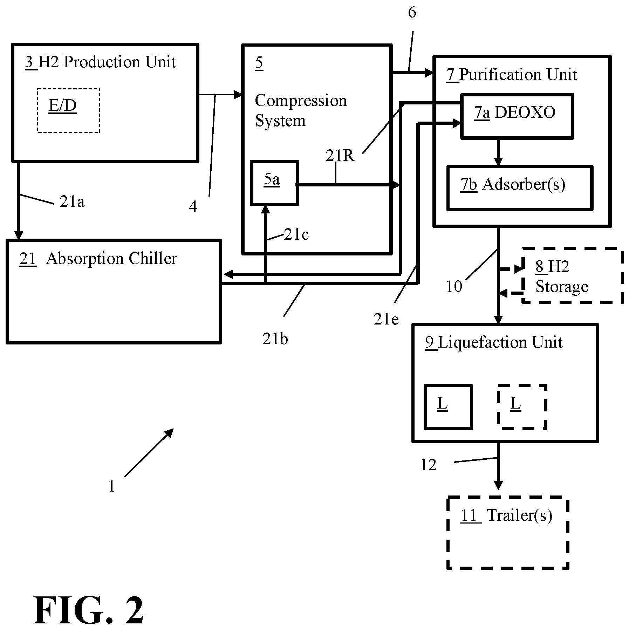

Figures 2, 3, and 4 illustrate exemplary implementations of the embodiment of the apparatus shown in Figure 1. For example, in Figure 2, the absorption chiller 21 is positioned to provide the cooling medium to cool compressed hydrogen gas output from the first compressor 5a (and/or provide inter-stage cooling for that first compressor 5a) *via* the first compressor cooling medium feed conduit 21c connected to the absorption chiller cooling medium output conduit 21b and also provide the cooling medium to the deoxygenation reactor aftercooler 7a *via* the purification unit heat exchanger cooling medium feed conduit 21e to cool the deoxygenated hydrogen gas output from the deoxygenation reactor of the purification unit 7. A warmed cooling medium return conduit 21R can be connected between the heat exchanger providing the first compressor cooling and the absorption chiller 21 and a warmed cooling medium return conduit 21R can be connected between the deoxygenation reactor aftercooler 7a and the absorption chiller 21 so that the warmed cooling medium output from those heat exchangers can be returned to the absorption chiller to be cooled back to the pre-selected chilling temperature.

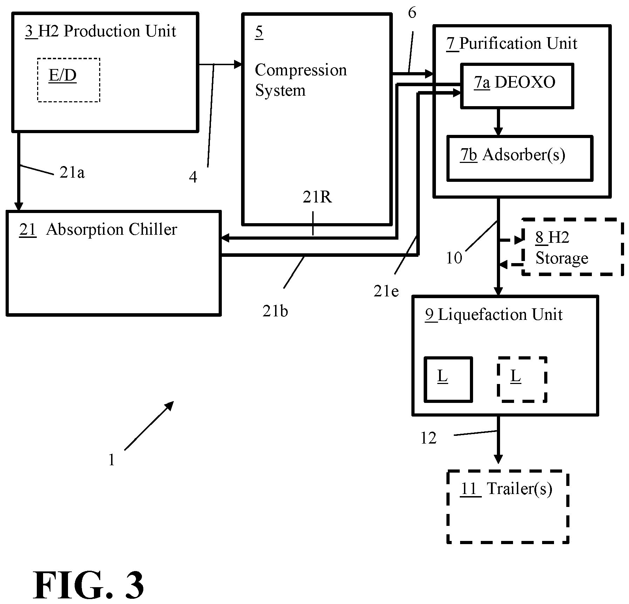

As another example, Figure 3 illustrates an exemplary implementation of the embodiment of the apparatus 1 shown in Figure 1 in which the absorption chiller 21 is positioned to provide the cooling medium to the deoxygenation reactor 7a *via* the purification unit heat exchanger cooling medium feed conduit 21e to cool the deoxygenated hydrogen gas output from the deoxygenation reactor of the purification unit 7. A warmed cooling medium return conduit 21R can be connected between the deoxygenation reactor aftercooler 7a and the absorption chiller 21 so that the warmed cooling medium output from the aftercooler 7a can be returned to the absorption chiller to be cooled back to the pre-selected chilling temperature.

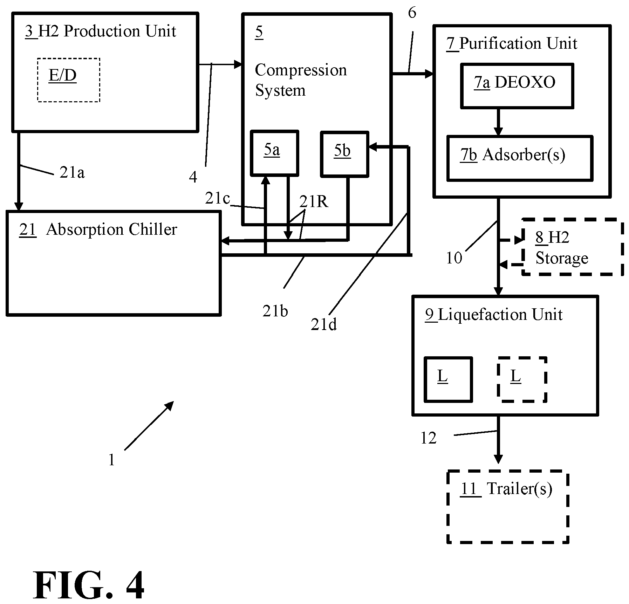

As yet another example, Figure 4 illustrates an exemplary implementation of the embodiment of the apparatus 1 shown in Figure 1 in which the absorption chiller 21 is positioned to provide the cooling medium for the compression system 5. In the exemplary implementation shown in Figure 4, the absorption chiller 21 is positioned to provide the cooling medium to cool compressed hydrogen gas output from the first compressor 5a (and/or provide inter-stage cooling for that first compressor 5a) *via* the first compressor cooling medium feed conduit 21c connected to the absorption chiller cooling medium output conduit 21b. Also, the absorption chiller 21 is positioned to provide the cooling medium to cool compressed hydrogen gas output from the second compressor 5b (and/or provide inter-stage cooling for that second compressor 5b) *via* the second compressor cooling medium feed conduit 21d connected to the absorption chiller cooling medium output conduit 21b. A warmed cooling medium return conduit 21R can be connected between the heat exchanger providing the first compressor cooling and the absorption chiller 21 and a warmed cooling medium return conduit 21R can be connected between the heat exchanger for providing the second compressor cooling and the absorption chiller 21 so that the warmed cooling medium output from those heat exchangers can be returned to the absorption chiller 21 to be cooled back to the pre-selected chilling temperature.

Embodiments of the absorption chiller 21 can be configured to utilize different absorption chiller arrangements. Figure 5 illustrates an exemplary absorption chiller 21 that can be utilized in the above discussed embodiments of Figure 1 and exemplary implementations of Figures 2-4, for example. Operation of embodiments of the absorption chiller 21 that can be utilized in embodiments of the apparatus 1 can also be appreciated from the discussion of absorption chiller operations provided in U.S. Patent Application Publication No. 2022/0099367.

Referring to Figure 5, the generator 22 of the absorption chiller 21 can receive at least one heated waste stream from the ammonia loop and/or hydrogen production unit 3 *via* at least one absorption chiller feed conduit 21a as discussed above. The generator 22 can utilize the heat from the heated waste stream(s) to form a high pressure concentrated solution HPCS to feed to the absorber 23a of the absorption chiller and also form a high-pressure refrigerant vapor RV for feeding to a condenser 23b of the absorption chiller. The condenser 23b can receive a condensing medium CMin to provide cooling to condense the refrigerant vapor RV for providing a low-pressure refrigerant liquid RL to an evaporator 24 of the absorption chiller 21. The warmed condensing medium CMout formed *via* its use in the condenser for condensing the high-pressure refrigerant vapor RV can be output from the condenser of the absorption chiller 21 as well.

In some arrangements, the condensing medium CMin can be from a chilled water supply and the warmed condensing medium CMout can be warmed water that can be output from the condenser for being fed to a chilled water return vessel. The condensing medium can alternatively be another fluid from another plant process or apparatus process element that can provide sufficient cooling to condense the high-pressure refrigerant vapor RV for forming the refrigerant liquid RL to be fed to the evaporator 24.

The evaporator 24 of the absorption chiller 21 can utilize heat from the warmed cooling medium received *via* at least one warmed cooling medium return conduit 21R to evaporate the low-pressure refrigerant liquid RL to form a low pressure refrigerant vapor RV for feeding to the absorber of the absorption chiller 21. This operation can cool the warmed cooling medium to the pre-selected chilling temperature (which can also be referred to as the pre-selected cooling fluid temperature) so that the cooling medium can be output from the evaporator 24 of the absorption chiller 21 at the pre-selected chilling temperature *via* at least one absorption chiller cooling medium output conduit 21b.

The absorber 23a of the absorption chiller 21 can receive the low-pressure refrigerant vapor RV from the evaporator 24 and the high pressure concentrated solution HPSC from the generator to output a high pressure diluted solution HPDS to the generator 22, which can be concentrated *via* the heat from the received waste stream(s) in the generator 22 for forming of the high pressure concentrated solution HPSC and high pressure refrigerant vapor RV. The solution used *via* the absorber 23a and generator 22 can be an ammonia-based solution, a lithium bromide (LiBr) solution, or other suitable solution.

The cooling medium can be water (*e.g*., chilling water) or another suitable cooling fluid (*e.g.*, a refrigerant, glycol, a mixture of water and glycol, *etc.).* As noted above, the absorption chiller 21 can be positioned and configured so that the providing of the cooling medium can occur in a closed-loop arrangement. This can help minimize the need for cooling fluid. From time to time, a makeup amount of cooling medium can be added or fed to the absorption chiller *via* an absorption chiller cooling medium output conduit 21b or a warmed cooling medium return conduit 21R to account for any losses of the cooling medium that may occur at a relatively low rate from operations of the absorption chiller 21.

In some configurations, the generator 22 can output a cooled waste stream 22H for being fed back to the hydrogen production unit 3 and/or ammonia loop of the ammonia manufacturing unit of an H2 Utilization Unit or H2 Conversion Unit 19. The output cooled waste stream can be further cooled *via* a generator waste stream heat exchanger HX1 (shown in broken line in Figure 5) to further cool that stream to a suitable temperature for recycling that stream back to the hydrogen production unit 3 or ammonia loop for subsequent use. Use of such a generator cooled waste stream heat exchanger HX1 can help further improve the operational efficiency associated with use of the absorption chiller 21.

Also, at least one warmed cooling medium return conduit 21R can include a warmed cooling medium heat exchanger HX2 (shown in broken line in Figure 5) to pre-cool or further heat the warmed cooling medium before it is fed to the evaporator 24. Such a heat exchanger arrangement can be utilized when the warmed cooling medium passed through the warmed cooling medium return can provide cooling or heating to another process element of the apparatus 1, for example. Use of one or more warmed cooling medium heat exchangers HX2 for the warmed cooling medium can help further improve the operational efficiency associated with use of the cooling medium and absorption chiller 21.

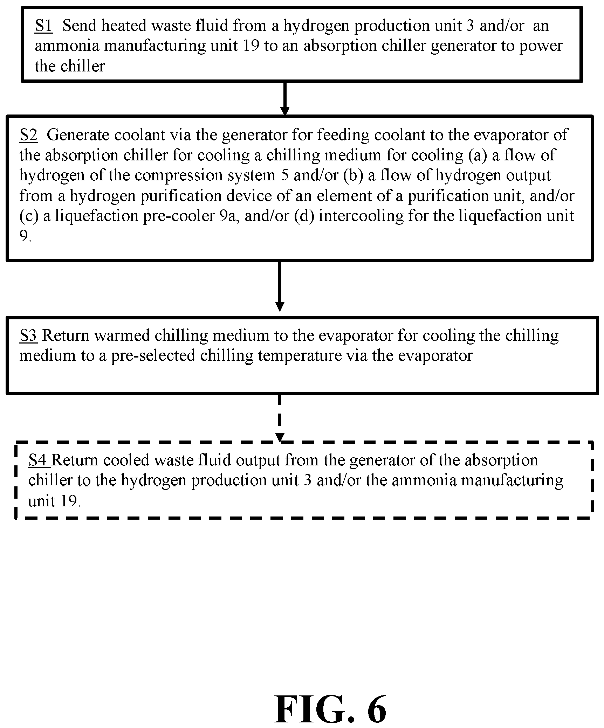

Figure 6 illustrates an exemplary process that can be utilized in any of our above discussed embodiments of our apparatus 1. For example, in a first step S1, at least one heated waste stream of fluid (*e.g*., flue gas or steam from an ammonia loop, flue gas from an ammonia dissociator, heated water or steam from one or more electrolyzers, *etc*.) can be sent from a hydrogen production unit 3 to an absorption chiller generator 22 to provide the heat for powering the absorption chiller 21.

In a second step S2, the generator can form a coolant (*e.g*., a refrigerant vapor) for feeding the coolant (*e.g*., refrigerant) to an evaporator 24 for cooling a chilling medium (*e.g*., chilling water, glycol, *etc.*) for cooling (a) a flow of hydrogen of the compression system 5 (*e.g.*, compression after cooling and/or compression inter-cooling between compressor stages), (b) a flow of hydrogen output form an element of a hydrogen purification unit 7 (*e.g*., provide a cooling medium to a deoxygenation reactor aftercooler 7a), (c) a liquefaction pre-cooler 9a, and/or (d) a intercooling of the liquefaction unit 9.

In a third step S3, the warmed chilling medium can be returned to the evaporator of the absorption chiller for chilling the chilling medium back to its pre-selected chilling temperature.

In an optional fourth step S4, the cooled waste fluid can be output from the generator 22 of the absorption chiller 21 to return that cooled waste fluid to the hydrogen production unit 3, ammonia loop of an ammonia manufacturing unit of an H2 Utilization Unit or H2 Conversion Unit 19 or other process element. Alternatively, the waste fluid can be disposed of in another suitable manner after the generator 22 utilizes heat from that fluid to help power the absorption chiller 21.

It should be appreciated that the fourth optional step can be provided while the third step S3 is also being performed. Also, embodiments of the process can include other steps. For example, embodiments of the process can include integrating an absorption chiller 21 into a plant to provide cooling medium flows to one or more plant process elements. As yet another example, an embodiment of the process can also include designing and building a plant to include and use the absorption chiller 21 to use at least one waste stream from hydrogen production and/or ammonia manufacturing to provide one or more flows of a chilling medium for cooling one or more process elements (*e.g.*, compression system coolers, purification unit cooler(s), liquefaction pre-cooler and/or inter-cooler *etc.).*

We evaluated embodiments of our apparatus 1 to try and quantify the types of improvements embodiments can provide. An exemplary improvement in compression system power savings that was calculated as being provided by some embodiments of our apparatus. Based on the conducted evaluations, the providing of cooling for compressed gas of the compression system 5 can provide a significant amount of compression power savings. In some embodiments, the power savings in kW can range from over 0 kW to 1,200 kW for some types of conventional systems.

Additional improvements can also (or alternatively) be provided. For example, cooling provided *via* the deoxygenation reactor aftercooler 7a can facilitate a reduction in size of the adsorber(s). The cooling temperatures that can be provided can result in the adsorber inlet stream having a lower water content, which can help reduce the amount of adsorbent material (and thus size) of the adsorber(s) 7b that can be used. We determined that some embodiments can provide a reduction in absorbent material and/or adsorber size of between 20% and 80%, for example.

As yet another improvement, we determined that the cooling that can be provided *via* the feeding of the waste heat streams from the hydrogen production unit 3 to the generator of the absorption chiller can result in reducing gas cooler temperatures that may be used in some types of hydrogen production units in which electrolyzers can be used for forming hydrogen gas. The reduced gas cooler temperatures that can be provided can help facilitate a reduction in the amount of water make-up that can be needed for electrolysis in the electrolyzers, for example. We have found that a reduction of as much as 450 kg/h water can be provided in some embodiments in which electrolyzers may be used in the hydrogen production unit 3. In other embodiments, a reduction of as much 20% of water makeup can be provided.

It should be appreciated that modifications to the embodiments explicitly shown and discussed herein can be made to meet a particular set of design objectives or a particular set of design criteria. For instance, the arrangement of valves, piping, and other conduit elements (*e.g.*, conduit connection mechanisms, tubing, seals, valves, *etc*.) for interconnecting different units of the apparatus for fluid communication of the flows of fluid between different elements (*e.g*., heat exchangers, storage devices, compressors, purification devices, *etc*.) can be arranged to meet a particular plant or apparatus 1 layout design that accounts for available area of the plant, sized equipment of the plant, and other design considerations. As another example, the flow rate, pressure, and temperature of the fluid passed through the various apparatus or system elements can vary to account for different design configurations and other design criteria.

Embodiments of the apparatus for utilization of an absorption chiller for hydrogen production, process for utilization of an absorption chiller in hydrogen production, and/or system for utilization of an absorption chiller for hydrogen production can each be configured to include process control elements positioned and configured to monitor and control operations (*e.g*., temperature and pressure sensors, flow sensors, an automated process control system having at least one work station that includes a processor, non-transitory memory and at least one transceiver for communications with the sensor elements, valves, and controllers for providing a user interface for an automated process control system that may be run at the work station and/or another computer device of the plant, *etc.*). It should be appreciated that embodiments can utilize a distributed control system (DCS) for implementation of one or more processes and/or controlling operations of an apparatus 1 as well.

As another example, it is contemplated that a particular feature described, either individually or as part of an embodiment, can be combined with other individually described features, or parts of other embodiments. The elements and acts of the various embodiments described herein can therefore be combined to provide further embodiments. Thus, while certain exemplary embodiments of the process, apparatus, system and methods of making and using the same have been shown and described above, it is to be distinctly understood that the invention is not limited thereto but may be otherwise variously embodied and practiced within the scope of the following claims.

## Claims

1. An apparatus (1) for utilization of an absorption chiller (21) in hydrogen production, comprising:
an absorption chiller (21) having a generator (22) and an evaporator (24), the absorption chiller (21) positioned so at least one heated waste fluid stream from a hydrogen production unit (3) and/or an ammonia manufacturing unit (19) is receivable by the generator (22) to provide heat for operation of the absorption chiller (21);
the generator (22) configured to provide a refrigerant for feeding to the evaporator (24), the evaporator (24) configured to cool a chilling medium to a pre-selected chilling temperature *via* the refrigerant to output the chilling medium at the pre-selected chilling temperature to: (i) a compression system (5) positioned to compress hydrogen output from the hydrogen production unit (3), (ii) a hydrogen purification unit (7) positioned to remove impurities from compressed hydrogen output from the compression system (5), (iii) a liquefaction pre-cooler (9a) positioned to cool hydrogen before the hydrogen is fed to a liquefaction unit (9), and/or (iv) the liquefaction unit (9) positioned to liquify the hydrogen gas to form at least one liquefied hydrogen product stream.

2. An apparatus (1) according to Claim 1, comprising:
the compression system (5) and the hydrogen production unit (3), the hydrogen production unit (3) comprising at least one electrolyzer (E) or at least one ammonia dissociator (D), the compression system (5) comprising at least one compressor (5a, 5b) positioned to compress hydrogen gas output from the hydrogen production unit (3) to a pre-selected compression system output pressure for feeding to the hydrogen purification unit (7).

3. An apparatus (1) according to Claim 2, comprising:
the hydrogen purification unit (7), the hydrogen purification unit (7) comprising a deoxygenation reactor aftercooler (7a) and at least one adsorber (7b), the hydrogen purification unit (7) positioned to receive the hydrogen gas at the pre-selected compression system output pressure output from the compression system (5).

4. An apparatus (1) according to Claim 3, comprising:
the liquefaction unit (9), the liquefaction unit (9) positioned to receive purified hydrogen gas output from the hydrogen purification unit (7) to liquify the purified hydrogen gas, the liquefaction unit (7) comprising at least one liquefier (L) to liquefy the purified hydrogen gas to form liquified hydrogen.

5. An apparatus (1) according to any of the preceding claims, wherein the absorption chiller (21) is configured to output the chilling medium at the pre-selected chilling temperature to:
(i) the compression system (5) and a deoxygenation reactor aftercooler (7a) of the hydrogen purification unit (7), or
(ii) the compression system (5), or
(iii) a deoxygenation reactor aftercooler (7a) of the hydrogen purification unit (7), or
(iv) the liquefaction pre-cooler (9a), or
(v) the liquefaction pre-cooler (9a) and the compression system (5), or
(vi) the liquefaction pre-cooler (a) and a deoxygenation reactor aftercooler (7a) of the hydrogen purification unit (7).

6. An apparatus (1) according to any of the preceding claims, wherein:
the chilling medium comprises water and the pre-selected chilling temperature is a temperature in a range from 5°C to 15°C; and
the at least one heated waste fluid stream is heated water output from at least one electrolyzer (E) of the hydrogen production unit (3), steam from an ammonia loop of the ammonia manufacturing unit (19), flue gas from a dissociator (D) of the hydrogen production unit (3) and/or flue gas from the ammonia loop of the ammonia manufacturing unit (19).

7. A process for utilization of an absorption chiller (21) in hydrogen production, comprising:
forming a refrigerant vapor to feed to an evaporator (24) of the absorption chiller (21) *via* heat from at least one waste fluid stream output from a hydrogen production unit (3) and/or an ammonia manufacturing unit (19);
cooling a chilling medium to a pre-selected chilling temperature *via* the evaporator (24) using the refrigerant vapor.

8. A process according to Claim 7, comprising:
returning warmed chilling medium to the evaporator (24) for cooling the warmed chilling medium to the pre-selected chilling temperature.

9. A process according to Claim 8, wherein the pre-selected chilling temperature is a temperature in a range from 5°C to 15°C.

10. A process according to any of Claims 7 to 9, comprising:
outputting the chilling medium from the evaporator (24) to at least one of (i) a compression system (5) positioned to compress hydrogen output from the hydrogen production unit (3), (ii) a hydrogen purification unit (7) positioned to remove impurities from compressed hydrogen output from the compression system (5), (iii) a liquefaction pre-cooler (9a) positioned to cool hydrogen before the hydrogen is fed to a liquefaction unit (9), and/or (iv) the liquefaction unit (9) positioned to liquify hydrogen gas to form at least one liquefied hydrogen product stream.

11. A process according to Claim 10, wherein the outputting of the chilling medium from the evaporator (24) is performed to output the chilling medium to the compression system (5) for compression intercooling and/or compression aftercooling.

12. A process Claim 10, wherein the outputting of the chilling medium from the evaporator (24) is performed to output the chilling medium to a deoxygenation reactor aftercooler (7a) of the hydrogen purification unit (7).

13. A process according to Claim 10, wherein the outputting of the chilling medium from the evaporator (24) is performed to output the chilling medium to the liquefaction pre-cooler (7a).

14. A process according to Claim 10, wherein the outputting of the chilling medium from the evaporator (24) is performed to output the chilling medium to a deoxygenation reactor aftercooler (7a) of the hydrogen purification unit (7) and output the chilling medium to the compression system (24) for compression intercooling and/or compression aftercooling.

15. A process according to Claim 10, wherein the outputting of the chilling medium from the evaporator (24) is performed to output the chilling medium to a deoxygenation reactor aftercooler (7a) of the hydrogen purification unit (7) and output the chilling medium to the liquefaction pre-cooler (9a).
